# EUROPÄISCHE PATENTSCHRIFT

(11) **EP 0 515 921 B1**
(45) Veröffentlichungstag und Bekanntmachung des Hinweises auf die Patenterteilung: **28.08.1996**
(21) Anmeldenummer: 92108199.8
(22) Anmeldetag: 15.05.1992
(51) Int. Cl.: B60Q 3/02

(54) **Innenleuchte für Kraftfahrzeuge**
Interior lamp for vehicle
Lampe intérieure pour véhicule

(30) Priorität: 27.05.1991 DE 4117278
(43) Veröffentlichungstag der Anmeldung: 02.12.1992
(73) Patentinhaber: Hella KG Hueck & Co., 59552 Lippstadt (DE)
(72) Erfinder: Decker, Detlef, W-4780 Lippstadt-Lipperode (DE); Jocher, Reiner, W-7042 Aidlingen 1 (DE); Dahm, Horst, W-7262 Neuhengstett (DE)

(56) Entgegenhaltungen:
- FR-A- 2 219 854
- GB-A- 1 365 324
- US-A- 3 455 622

## Beschreibung

Die Erfindung betrifft eine Innenleuchte für Kraftfahrzeuge, die in einem Halte- oder Zuggriff eingesetzt ist, dessen beiden Enden jeweils einen Sockel aufweisen, der fest mit der Karosserie verbindbar ist, und aus dessen zwischen den beiden Sockeln angeordnetem, hohl ausgeführten Zwischenstück, das teilweise transparent ausgebildet ist, das Licht austritt.

Eine Innenleuchte dieser Art ist bereits aus der DE-PS 935 833 bekannt, die auf halber Höhe der Tür in einem Zuziehgriff angeordnet ist. Die hier verwendete Soffittenglühlampe nimmt einen Großteil des Hohlraums im Haltegriff ein. Wollte man die Lichtausbeute erhöhen, so wäre dies unter Zuhilfenahme eines Reflektors möglich. Dieses würde jedoch eine Vergrößerung des Querschnitts des Handgriffs zur Folge haben. Der Dicke des Handgriffs sind jedoch durch die Anatomie der menschlichen Hand Grenzen gesetzt. Mit einer einzigen Glühlampe und ohne Lichtsammeloptik wird der Innenraum eines Fahrzeugs jedoch nur unzureichend ausgeleuchtet.

Aus der DE-OS 38 38 770 ist ein Beleuchtungssystem bekannt, welches Lichtleitfasern für Fern- und Abblendlicht sowie für die rückwärtige und innere Beleuchtung des Kraftfahrzeugs benutzt. Dabei wird eine Lichtquelle hoher Intensität benutzt, deren Licht auf jeweils eines der Enden einer Vielzahl von Lichtleitfasern gerichtet ist und mit dem anderen Ende der einzelnen Lichtleitfasern Linsen zugeordnet ist. Diese Linsen ergeben in ihrer Gesamtheit ein gewünschtes Lichterscheinungsbild. Diese Art der Leuchte ist von ihrem Aufwand her sehr aufwendig und teuer.

Es ist Aufgabe der Erfindung, die bekannte in einem Haltegriff angeordnete Innenleuchte so zu verbessern, daß ein größerer Anteil des aus der Glühlampe austretenden Lichts zur Ausleuchtung des Fahrzeuginnenraums genutzt wird, ohne daß der Haltegriff in dem Bereich, in dem das Licht austritt und von der Hand umgriffen wird, in seinem Querschnitt vergrößert werden muß. Weiterhin soll eine gleichmäßige Lichtabstrahlung aus einer großen Fläche erzielt werden, um bei einer guten Ausleuchtung des Fahrzeuginnenraums keine Blendwirkung zu erzeugen.

Diese Aufgabe wird erfindungsgemäß dadurch gelöst, daß
- in mindestens einem Sockel eine Glühlampe eingesetzt ist, der ein Reflektor und/oder eine Linse zugeordnet ist, die das Licht in einem Brennort sammelt,
- in dem Zwischenstück des Haltegriffs ein Lichtleiter angeordnet ist, der mit seiner der Glühlampe zugewandten Stirnfläche etwa im Brennort des Reflektors oder der Linse liegt und der auf der der Lichtaustrittsrichtung abgewandten Längsseite mit Reflexionsmitteln versehen ist.

Bei einer vorteilhaften Ausgestaltung des Erfindungsgedankens, sind mit dem Zwischenstück des Haltegriffs zwei Lichtleitstäbe parallel verlaufend angeordnet, und in beiden Sockeln ist jeweils eine Lichtquelle eingesetzt. Dadurch kann der Griffbereich selbst beim Einsatz von zwei Glühlampen besonders flach gehalten werden, was vor allem der handgerechten Formgebung zugute kommt und gleichzeitig die lichtabstrahlende Fläche vergrößert.

Bei einer Leuchte mit den Merkmalen der Ansprüche 3 bis 5 wird die Lichtausbeute wesentlich verstärkt, da nicht nur Lichtstrahlen, die in Eingangsrichtung den Lichtleitstab durchlaufen zur Abstrahlung gelangen, sondern auch jene, die an der zweiten Stirnfläche des Lichtleitstabes durch Umlenkung in die entgegengesetzte Richtung verlaufen.

Um dem Licht der Innenleuchte die gewünschte Lichtverteilung und Intensität zu geben, ist es vorteilhaft, das Reflexionsmittel auf Bereiche des Lichtstabes aufgebracht sind. Dazu können Oberflächenaufrauhungen, Prismen oder eine lichtundurchlässige, helle Farbschicht verwendet werden.

Damit die Lichtleitstäbe durch die Benutzung des Haltegriffs keine Deformation erfahren, die eine Dejustierung der Lichtleitstäbe vor allem zur Lichtquelle und den dazu ausgerichteten Reflektoren hervorrufen, ist es vorteilhaft, daß das Zwischenstück des Haltegriffs als steifer rinnenförmiger Steg ausgebildet ist und die Lichtleitstäbe darin eingebettet sind.

Um dem Zwischenstück die handgerechte Form zu geben, aber auch um den Teil des Leuchteninneren abzudecken, der unsichtbar bleiben soll, ist das rinnenförmig ausgebildete Zwischenstück im Bereich der Lichtleitstäbe durch eine transparente Abdeckung zu einem Rohr komplettiert, wobei die Abdeckung aus einer Kunststoffleiste besteht, die an ihren Längsrändern vorteilhafterweise lichtundurchlässig ausgeführt ist. Dabei kann die Lichtundurchlässigkeit zweckmäßigerweise durch eine fensterrahmenartige Abdeckung erfolgen. Die Abdeckung kann jedoch auch rohrförmig gestaltet sein, so daß das Zwischenstück ummantelt ist.

Bei einer weiteren zweckmäßigen Ausführungsform der Erfindung ist das Zwischenstück in den Endbereichen Z-förmig abgewinkelt, wodurch sich eine gestalterisch gute Lösung zur Anbringung an der Innenwand der Karosserie ergibt. Die beiden Sockel werden von den freien Enden des Zwischenstücks und von den darauf aufgesetzten lichtundurchlässigen Kappen gebildet.

Mit der Unterbringung der Lichtquellen und den Reflektoren in Trägerstücken, die auf dem freien Schenkel des Z-förmigen Endabschnitts aufgebracht sind, kann die Griffstärke des Zwischenstücks vorteilhaft schlank gehalten werden.

Je nach Anforderung der Lichtverteilung der Innenleuchte kann es vorteilhaft sein, die Prismen auf einem Teil der Umfangsfläche des Lichtleitstabes bogenförmig oder aber in der Linie einer Sehne des im Querschnitt kreisförmigen Lichtleitstabes verlaufend einzubringen. Welche Variante zum Tragen kommt, ist jedoch von der gewünschten Lichtverteilung und von den Größenverhältnissen des Lichtleiterstabes abhängig.

Die Erfindung wird nachstehend anhand einer Zeichnung näher erläutert. Darin zeigen
- Figur 1: die Draufsicht auf den Haltegriff der Innenleuchte teilweise im Schnitt,
- Figur 2: die Seitenansicht auf den Haltegriff der Innenleuchte teilweise im Schnitt,
- Figur 3: einen Schnitt gemäß der Linie A-A in Figur 1,
- Figur 4: die Prinzipdarstellung einer Lichtleiterleuchte und
- Figur 5: eine Einzelheit bei X.

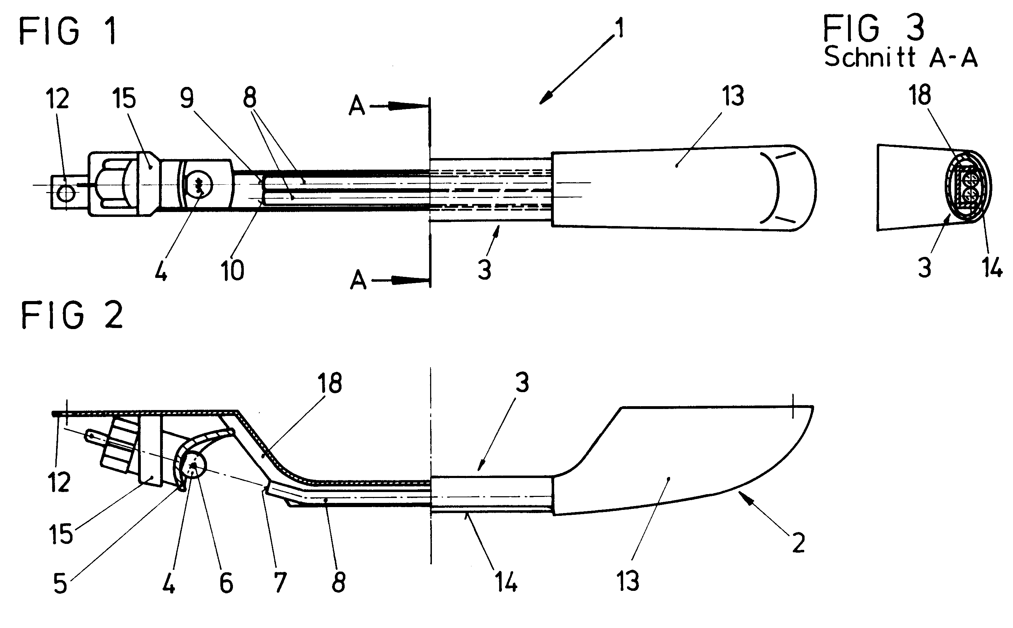

Die in den Figuren 1 bis 5 dargestellte Innenleuchte weist ein Zwischenstück (3) auf, welches das Gerüst des Haltegriffs (1) bildet und dazu im Längsverlauf eine Rinne bildet und in den Endbereichen Z-förmig abgewinkelt ist. Die freien Enden (12) dienen zur Befestigung des Haltegriffs an der Karosserie des Kraftfahrzeugs, aber auch der Aufnahme eines Trägerteils (15), an welchem je eine Glühlampe (4) mit Reflektor (5) befestigt ist. Das freie Ende (12) ist von einer Kappe (13) lichtdicht abgedeckt und bildet mit dieser zusammen den Sockel (2) des Haltegriffs (1). Das rinnenförmig ausgebildete Zwischenstück (3) des Haltegriffs (1) nimmt zwei Lichtleitstäbe (8) auf. Das rinnenförmige Zwischenstück (3) wird von einer teilweise transparenten Abdeckung (14) umgeben, die gleichzeitig die unmittelbare Grifffläche für eine Hand darstellt. Diese Abdeckung bildet also einerseits das Gehäuse für die Lichtleitstäbe und andererseits das Griffstück des Haltegriffs. Je eine Stirnfläche (9) eines Lichtleitstabes (8) ist so angeordnet, daß sie im Brennort (7) des ellipsoidförmigen Reflektors (5) positioniert ist, während der andere Brennort (6) jeweils mit der Lage der Glühwendel der Glühlampe (4) übereinstimmt. Die andere Stirnfläche (10) der Lichtleitstäbe (8) ist lichtreflektierend, beispielsweise verspiegelt ausgeführt. Die Lichtleitstäbe (8) weisen eine Abwinkelung an den Enden auf, mit der sie dem Verlauf des Zwischenstücks in etwa angepaßt sind. Auf der der Lichtaustrittsrichtung abgewandten und dem Haltegriff (1) zugewandten Seite der Lichtleitstäbe (8) sind Reflexionsmittel (11) in Form von Prismen (16) eingebracht, die das Licht so stark ablenken, daß es auf der gegenüberliegenden Seite der Lichtleitstäbe (8) aus diesen austritt.

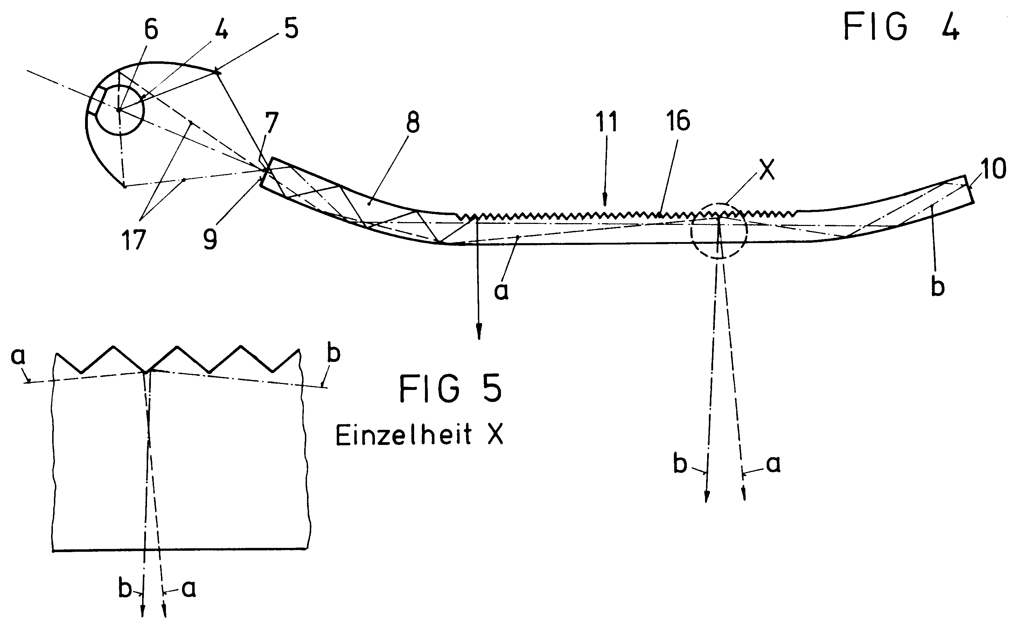

Der in Figur 4 dargestellte Prinzipaufbau demonstriert die Funktionsweise der Lichtleiterleuchte. Die Glühwendel einer Glühlampe (4), was beispielweise eine Halogenglühlampe sein kann, ist im ersten Brennort (6) eines Reflektors (5), in diesem Fall eines Ellipsoidreflektors, angeordnet. Der Reflektor (5) richtet die Lichtbündel (17) auf den zweiten Brennort (7), der etwa in der Stirnfläche (9) eines zylindrischen Lichtleiterstabes (8) liegt. Hier wird das konvergierend verlaufende Lichtbündel (17) in den Lichtleiterstab (8) eingekoppelt. Durch Totalreflexion an den Wänden des Lichtleiterstabes (8) werden die Lichtbündel (17) innerhalb des Stabes (8) in Richtung seines Endes geleitet. Dabei gelangt ein Teil der Lichtbündel (17) in Abhängigkeit von seinem Auftreffwinkel bereits beim ersten Durchlauf durch den Lichtleiterstab (8) auf die Prismen (16) (z. B. Strahl a) und tritt dann aus dem Lichtleiterstab wie gewünscht aus und leuchtet den Innenraum des Kraftfahrzeugs aus. Lichtstrahlen, die beim ersten Passieren des Lichtleiterstabs (8) nicht auf die Prismen (16) auftreffen, werden von der Stirnfläche (10) am anderen Ende des Lichtleitstabes (8), die in diesem Falle verspiegelt ist, reflektiert, um danach auf dem Rückweg ebenfalls von den Prismen (16) (z. B. Strahl b) so abgelenkt zu werden, daß sie aus dem Lichtleiter (8) austreten. Die erreichten Lichtstärken mit dieser Art Leuchte stehen den konventionellen Arten nicht nach und ermöglichen eine noch homogenere und blendfreiere Ausleuchtung des Innenraums. Trotzdem kann der Haltegriff (1) in einer schlanken, stilistisch angenehm wirkenden Form gehalten werden.

### Bezugszahlenverzeichnis

- (1): Haltegriff
- (2): Sockel
- (3): Zwischenstück
- (4): Glühlampe
- (5): Reflektor
- (6): Brennort
- (7): Brennort
- (8): Lichtleitstab
- (9): Stirnfläche
- (10): Stirnfläche
- (11): Reflexionsmittel
- (12): freie Enden
- (13): Kappen
- (14): Abdeckung
- (15): Trägerstücke
- (16): Prismen
- (17): Lichtbündel
- (18): rinnenförmiger Steg

## Patentansprüche

1. Innenleuchte für Kraftfahrzeuge, die in einem Halte- oder Zuggriff (1) eingesetzt ist, dessen beiden Enden jeweils einen Sockel aufweisen, der fest mit der Karosserie verbindbar ist, und aus dessen zwischen den beiden Sockeln (2) angeordnetem, hohl ausgeführten Zwischenstück (3), das teilweise transparent ausgebildet ist, das Licht austritt, gekennzeichnet durch folgende Merkmale:
- in mindestens einem Sockel (2) ist eine Glühlampe (4) eingesetzt,
- der ein Reflektor (5) und/oder eine Linse zugeordnet ist,
- die das Licht in einem Brennort sammelt,
- in dem Zwischenstück (3) des Haltegriffs (1) ist ein Lichtleiter angeordnet, der
- mit seiner der Glühlampe (4) zugewandten Stirnfläche (9) etwa im Brennort (7) des Reflektors (5) oder der Linse liegt und
- der auf der der Lichtaustrittsrichtung abgewandten Längsseite mit Reflexionsmitteln (11) versehen ist.

2. Innenleuchte für Kraftfahrzeuge nach Anspruch 1, dadurch gekennzeichnet, daß als Lichtleiter zwei Lichtleitstäbe (8) verwendet werden, die parallel zueinander verlaufen und in beiden Sockeln (2) jeweils eine Lichtquelle (4) mit Reflektor (5) eingesetzt ist, der das Licht jeweils auf die Stirnfläche eines Lichtleitstabs (8) bündelt.

3. Innenleuchte für Kraftfahrzeuge nach Anspruch 2, dadurch gekennzeichnet, daß jeder der beiden Lichtleitstäbe (8) an der der zugehörigen Glühlampe (4) abgewandten Stirnfläche (10) lichtreflektierend ausgebildet ist.

4. Innenleuchte für Kraftfahrzeuge nach Anspruch 3, dadurch gekennzeichnet, daß die Reflexion an der Stirnfläche (10) der Lichtleitstäbe (8) durch eine aufgetragene Spiegelschicht erreicht wird.

5. Innenleuchte für Kraftfahrzeuge nach Anspruch 3, dadurch gekennzeichnet, daß die Reflexion an der Stirnfläche (10) durch ein Umlenkprisma erreicht wird.

6. Innenleuchte für Kraftfahrzeuge nach Anspruch 1, dadurch gekennzeichnet, daß die Reflexionsmittel (11) an der Längsseite der Lichtleitstäbe (8) durch Oberflächenaufrauhung hergestellt sind.

7. Innenleuchte für Kraftfahrzeuge nach Anspruch 1, dadurch gekennzeichnet, daß die Reflexionsmittel (11) an der Längsseite der Lichtleitstäbe (8) durch quer zur Längsachse der Lichtleitstäbe sich erstreckende Prismen (16) gebildet sind.

8. Innenleuchte für Kraftfahrzeuge nach Anspruch 1, dadurch gekennzeichnet, daß das Reflexionsmittel (11) an der Längsseite der Lichtleitstäbe durch eine lichtundurchlässige, helle Farbschicht gebildet ist.

9. Innenleuchte für Kraftfahrzeuge nach Anspruch 1, dadurch gekennzeichnet, daß das Zwischenstück (3) des Haltegriffs (1) aus einem rinnenförmigen Steg (18) gebildet ist, in dem die Lichtleitstäbe (8) eingebettet sind.

10. Innenleuchte für Kraftfahrzeuge nach Anspruch 9, dadurch gekennzeichnet, daß der rinnenförmige Steg (18) in dem Bereich der Lichtleitstäbe (8) durch eine transparente Abdeckung (14) zu einem Rohr komplettiert ist.

11. Innenleuchte nach Anspruch 9, dadurch gekennzeichnet, daß die Abdeckung (14) des Zwischenstückes von einem Rohr gebildet wird.

12. Innenleuchte für Kraftfahrzeuge nach Anspruch 11, dadurch gekennzeichnet, daß die transparente Abdeckung (14) aus transparentem Kunststoff besteht und bis auf die Lichtaustrittsfläche lichtundurchlässig ausgeführt ist.

13. Innenleuchte für Kraftfahrzeuge nach Anspruch 12, dadurch gekennzeichnet, daß der transparente Teil der Abdeckung (14) in einen lichtundurchlässigen Rahmen eingesetzt ist.

14. Innenleuchte für Kraftfahrzeuge nach Anspruch 1 oder 9, dadurch gekennzeichnet, daß das Zwischenstück (3) in den Endbereichen Z-förmig abgewinkelt ist.

15. Innenleuchte für Kraftfahrzeuge nach Anspruch 1, dadurch gekennzeichnet, daß die beiden Sockel (2) von den freien Enden (12) des Zwischenstücks (3) und von darauf aufgesetzten lichtundurchlässigen Kappen (13) gebildet sind.

16. Innenleuchte für Kraftfahrzeuge nach Anspruch 1, dadurch gekennzeichnet, daß die Reflektoren (5) in Trägerstücke (15) eingesetzt sind, die auf den freien Schenkeln der Z-förmig abgewinkelten Endabschnitte (12) aufgebracht sind.

17. Innenleuchte für Kraftfahrzeuge nach Anspruch 1 oder 15, dadurch gekennzeichnet, daß die Reflektoren (5) Ellipsoidreflektoren sind.

18. Innenleuchte für Kraftfahrzeuge nach Anspruch 7, dadurch gekennzeichnet, daß die Prismen (16) über den Umfang des Lichtleiterstabs (8) bogenförmig verlaufend eingebracht sind.

19. Innenleuchte für Kraftfahrzeuge nach Anspruch 7, dadurch gekennzeichnet, daß die Prismen (16) in der Linie einer Sehne des im Querschnitt kreisrunden Lichtleitstabs verlaufen.

## Claims

1. Interior light for motor vehicles, which is fitted in a holding or pulling handle (1) the two ends of which comprise a respective socket which is firmly connectable to the vehicle body, with light exiting from a partially transparent intermediate element (3) which is positioned between the two sockets (2), **characterized by** the following features:
- a light bulb (4) is fitted in at least one socket (2)
- which is associated with a reflector (5) and/or a lens
- which gathers the light in a focal point;
- in the intermediate element (3) of the handle (1) is arranged a light conductor
- its end surface (9) which is facing towards the light bulb (4) being located approximately in the focal point (7) of the reflector (5) or the lens, and
- which is provided with reflexion means (11) on the longitudinal side which is facing away from the direction of exiting light.

2. Interior light for motor vehicles according to Claim 1, **characterized in that** two light conducting tubes (8), which extend parallel to each other, are used as light conductors, and into both sockets (2) is inserted a respective light source (4) with reflector (5) which focuses the light onto a respective end surface of a light conducting tube (8).

3. Interior light for motor vehicles according to Claim 2, **characterized in that** each of the two light conducting tubes (8) is designed to be light-reflecting at the end surface (10) which is facing away from the associated light bulb (4).

4. Interior light for motor vehicles according to Claim 3, **characterized in that** a reflexion at the end surface (10) of the light conducting bars (8) is achieved by an applied reflective surface.

5. Interior light for motor vehicles according to Claim 3, **characterized in that** a reflexion at the end surface (10) is achieved by a deviating prism.

6. Interior light for motor vehicles according to Claim 1, **characterized in that** the reflexion means (11) at the longitudinal side of the light conducting tubes (8) is produced by roughening the surface.

7. Interior light for motor vehicles according to Claim 1, **characterized in that** the reflexion means (11) at the longitudinal side of the light conducting tubes (8) are realized by prisms (16) which extend transversely to the longitudinal axis of the light conducting tubes.

8. Interior light for motor vehicles according to Claim 1, **characterized in that** a reflexion means (11) on the longitudinal side of the light conducting tubes is realized by a light-impermeable light colour coating.

9. Interior light for motor vehicles according to Claim 1, **characterized in that** the intermediate element (3) of the handle (1) is formed by a grooved web (18) with the light conducting tubes (8) embedded therein.

10. Interior light for motor vehicles according to Claim 9, **characterized in that** the grooved web (18) is in the area of the light conducting tubes (8) completed by a transparent cover (14) into a tube.

11. Interior light according to Claim 9, **characterized in that** the cover (14) of the intermediate element is made of a pipe.

12. Interior light for motor vehicles according to Claim 11, **characterized in that** the transparent cover (14) is made of transparent plastic material and light-impermeable with the exception of the light-exiting surface.

13. Interior light for motor vehicles according to Claim 12, **characterized in that** the transparent portion of the cover (14) is inserted into a light-impermeable frame.

14. Interior light for motor vehicles according to Claim 1 or 9, **characterized in that** the intermediate element (3) is in the end regions angled in the shape of a Z.

15. Interior light for motor vehicles according to Claim 1, **characterized in that** both sockets (2) are composed of the free ends (12) of the intermediate element (3) and of light-impermeable caps (13) which are placed thereonto.

16. Interior light for motor vehicles according to Claim 1, **characterized in that** the reflectors (5) are inserted into support elements (15) which are placed on the free shanks of the end sections (12) which are angled in the shape of a Z.

17. Interior light for motor vehicles according to Claim 1 or 15, **characterized in that** the reflectors (5) are ellipsoid reflectors.

18. Interior light for motor vehicles according to Claim 7, **characterized in that** the prisms (16) are fitted so as to arc over the periphery of the light conducting tubes (8).

19. Interior light for motor vehicles according to Claim 7, **characterized in that** the prisms (16) extend in the line of a tendon of a cross-sectionally circular light conducting tube.

## Revendications

1. Luminaire intérieur pour véhicules à moteur, qui est inséré dans une poignée de maintien ou dans une poignée de tirage (1) dont chacune des deux extrémités présente un pied qui peut être solidarisé avec la carrosserie et de la partie intermédiaire (3), disposée entre les deux pieds (2), réalisée creuse et conçue partiellement transparente, de laquelle sort la lumière, caractérisé par les attributs suivants:
- dans au moins un pied (2) est insérée une ampoule à incandescence (4),
- à laquelle est associé un réflecteur (5) et/ou une lentille,
- qui condense la lumière en un foyer,
- dans la partie intermédiaire (3) de la poignée (1) est disposé un guide de la lumière, qui
- par sa face frontale (9), orientée du côté de l'ampoule (4), se trouve à peu près au foyer (7) du réflecteur (5) ou de la lentille et
- qui est muni, sur le côté longitudinal opposé au sens de sortie de la lumière, de moyens de réflexion (11).

2. Luminaire intérieur pour véhicules à moteur selon la revendication 1, caractérisé par le fait que, comme guides de la lumière, on emploie deux barreaux (8) guides de la lumière, qui sont orientés parallèlement l'un à l'autre et que, dans chacun des deux pieds (2) est insérée une source de lumière (4) avec un réflecteur (5) qui focalise chaque fois la lumière sur la surface frontale d'un barreau (8) guide de la lumière.

3. Luminaire intérieur pour véhicules à moteur selon la revendication 2, caractérisé par le fait que chacun des deux barreaux (8) guides de la lumière est conçu réfléchissant la lumière sur la surface frontale (10) opposée à l'ampoule correspondante (4).

4. Luminaire intérieur pour véhicules à moteur selon la revendication 3, caractérisé par le fait que la réflexion sur la surface frontale (10) des barreaux (8) guides de la lumière se fait au moyen d'une couche réfléchissante rapportée.

5. Luminaire intérieur pour véhicules à moteur selon la revendication 3, caractérisé par le fait que la réflexion sur la surface frontale (10) se fait au moyen d'un prisme à réflexion totale.

6. Luminaire intérieur pour véhicules à moteur selon la revendication 1, caractérisé par le fait que les moyens de réflexion (11) sont obtenus sur le côté longitudinal des barreaux (8) guides de la lumière en rendant rugueuse leur surface.

7. Luminaire intérieur pour véhicules à moteur selon la revendication 1, caractérisé par le fait que les moyens de réflexion (11) sur le côté longitudinal des barreaux (8) guides de la lumière sont formés par des prismes (16) s'étendant transversalement à l'axe longitudinal des barreaux guides de la lumière.

8. Luminaire intérieur pour véhicules à moteur selon la revendication 1, caractérisé par le fait que le moyen de réflexion (11) est formé sur le côté longitudinal des barreaux guides de la lumière par une couche de couleur claire, opaque à la lumière.

9. Luminaire intérieur pour véhicules à moteur selon la revendication 1, caractérisé par le fait que la partie intermédiaire (3) de la poignée (1) est formée d'une moulure (8), en forme de rigole, dans laquelle les barreaux (8) guides de la lumière sont insérés.

10. Luminaire intérieur pour véhicules à moteur selon la revendication 9, caractérisé par le fait que, dans la zone des barreaux (8) guides de la lumière, la moulure en forme de rigole (8) est complétée par un capotage transparent (14) pour donner un tube.

11. Luminaire intérieur selon la revendication 9, caractérisé par le fait que le capotage (14) de la partie intermédiaire est formé par un tube.

12. Luminaire intérieur pour véhicules à moteur selon la revendication 11, caractérisé par le fait que le capotage transparent (14) est constitué d'un plastique transparent et qu'il est réalisé opaque à la lumière sauf à la surface de sortie de la lumière.

13. Luminaire intérieur pour véhicules à moteur selon la revendication 12, caractérisé par le fait que la partie transparente du capotage (14) est placée dans un cadre opaque à la lumière.

14. Luminaire intérieur pour véhicules à moteur selon la revendication 1 ou 9, caractérisé par le fait que la partie intermédiaire (3) est contre-coudée en forme de Z dans les zones d'extrémité.

15. Luminaire intérieur pour véhicules à moteur selon la revendication 1, caractérisé par le fait que les deux pieds (2) sont formés par les extrémités libres (12) de la partie intermédiaire (3) et par des capuchons (13), opaques à la lumière, placés dessus.

16. Luminaire intérieur pour véhicules à moteur selon la revendication 1, caractérisé par le fait que les réflecteurs (5) sont placés dans des pièces supports (15) qui sont rapportées sur les ailes libres des portions d'extrémité contre-coudées en forme de Z.

17. Luminaire intérieur pour véhicules à moteur selon la revendication 1 ou 15, caractérisé par le fait que les réflecteurs (5) sont des réflecteurs ellipsoïdes.

18. Luminaire intérieur pour véhicules à moteur selon la revendication 7, caractérisé par le fait que les prismes (16) rapportés sur la périphérie du barreau (8) guides de la lumière sont disposés selon un arc.

19. Luminaire intérieur pour véhicules à moteur selon la revendication 7, caractérisé par le fait que les prismes (16) sont disposés sur la ligne formée par une corde du barreau guide de la lumière, circulaire en coupe.
